# FASCICULE DE BREVET EUROPEEN

(11) **EP 0 543 724 B1**
(45) Date de publication et mention de la délivrance du brevet: **18.10.1995**
(21) Numéro de dépôt: 92403098.4
(22) Date de dépôt: 18.11.1992
(51) Int. Cl.: F16B 13/10, B29C 45/00, B22D 19/12

(54) **Cheville à bascule moulée d'une seule pièce et son procédé de moulage**
Einstückig gegossener Kippdübel und Verfahren zum Formen desselben
Integrally moulded toggle fastener and method for moulding the same

(30) Priorité: 22.11.1991 FR 9114377
(43) Date de publication de la demande: 26.05.1993
(73) Titulaire: SOCIETE DE PROSPECTION ET D'INVENTIONS TECHNIQUES SPIT, F-26501 Bourg-Les-Valence Cédex (FR)
(72) Inventeur: Vernet, Franck, F-26300 Bourg de Peage (FR); Barthomeuf, Jean-Paul, F-26300 Bourg de Peage (FR)
(74) Mandataire: Bloch, Gérard

(56) Documents cités:
- DE-A- 2 549 868
- US-A- 3 927 597

## Description

La présente invention est relative à une cheville à bascule pour la fixation d'une pièce à une paroi support comprenant
- un corps de forme générale tubulaire, avec deux bras latéraux allongés, comportant chacun, une rainure, et un alésage, débouchant entre les bras pour le passage d'une vis de fixation de la cheville et de la pièce,
- une bascule montée coulissante et pivotante sur les bras du corps, par deux pivots s'étendant dans leurs rainures, avec une rampe de coopération avec l'extrémité de la vis, pour faire pivoter la bascule d'une position d'insertion de cheville dans la paroi, dans laquelle elle est alignée avec les bras, à une position basculée, dans laquelle elle est perpendiculaire aux bras, et un orifice, pour, en position basculée, coopérer avec la vis de fixation et faire coulisser la bascule perpendiculairement aux bras du corps jusqu'à une position de fixation et
- des moyens de maintien temporaire de la bascule en position d'insertion entre les bras du corps et détachables sous l'action de la vis de fixation (US-A-3927597).

Une telle cheville est par exemple employée pour la fixation d'une pièce à une plaque de plâtre constituée d'un coeur en matériau friable, du plâtre, entre deux couches de carton. La difficulté d'y fixer une pièce, et notamment une pièce lourde, réside dans la tendance du plâtre à s'émietter et celle des couches de carton à se déchirer facilement. Cette difficulté est surmontée par une cheville du type défini ci-dessus pourvue, en outre, d'une extrémité de perçage, soit sur le corps, soit sur la bascule , et d'un filetage sur le corps pour d'abord fixer la cheville dans la plaque puis éviter, après fixation de la pièce, la rotation de la cheville en cas de devissage de la vis de fixation.

La réalisation d'une telle cheville pouvait s'effectuer par moulage en zinc du corps et estampage de la bascule à partir d'un flanc métallique ou encore par moulage en matière plastique du corps et de la bascule séparément.

La présente demande vise d'abord à proposer une solution plus facile au problème de la réalisation de la cheville définie ci-dessus.

A cet effet, l'invention concerne un procédé de réalisation de la cheville du type défini ci-dessus, caractérisé par le fait qu'on moule en matière injectable simultanément et en une seule pièce le corps et la bascule, l'injection dans les parties de moule correspondant à la bascule s'effectuant au moins par un pont, ou canal, d'alimentation comprenant les portions de moule correspondant aux moyens de maintien temporaire de la bascule en position d'insertion.

De préférence, on forme lesdits moyens de maintien à l'extrémité libre de l'une au moins des bras latéraux du corps.

Avantageusement, on effectue le moulage de la cheville avec deux porte-empreinte joints le long d'un premier plan de symétrie du corps s'étendant entre ses bras latéraux.

Dans ce cas, on peut réaliser l'alésage de passage de la vis de fixation dans le corps à l'aide d'une broche qu'on introduit entre les deux porte-empreinte le long de l'axe du corps tubulaire à former.

Avantageusement, l'ensemble de la cheville est moulé à l'aide des deux porte-empreinte, de la broche axiale de l'alésage de passage de vis et de deux tiroirs qu'on introduit latéralement entre les deux porte-empreinte et en sens opposés le long dudit premier plan de symétrie du corps et orthogonalement à la broche.

Dans la mise en oeuvre effective du procédé de l'invention, on forme, à l'aide des deux porte-empreinte, le corps de cheville, de la broche axiale, l'alésage de passage de vis, et des deux tiroirs latéraux, la bascule.

Ainsi, on peut prévoir une paire de porte-empreinte doubles, deux paires de tiroirs latéraux et deux broches axiales qu'on introduit en sens opposés, pour former simultanément deux ensembles de cheville.

L'invention concerne également la cheville à bascule réalisée selon le procédé de la présente demande, caractérisée par le fait que lesdits moyens de maintien temporaire de la bascule en position d'insertion comprennent au moins un pion cisaillable qui, lors de l'insertion de la cheville dans la paroi, entraîne la bascule avec le corps.

Avantageusement, il est formé des pions de maintien cisaillables aux extrémités libres des bras du corps.

Avantageusement toujours, des pivots de bascule sont formés à proximité des extrémités libres des bras du corps, de préférence en-deçà, et ont une section plus grande que celle du ou des pions de maintien.

Avantageusement encore, ces pivots sont formés quasiment aux fonds des rainures des bras du corps. On pourrait aussi et inversement prévoir les pions de maintien en-deçà des pivots.

De préférence, les bras de levier formés entre les pivots et les pions sont sensiblement deux fois moins longs que les bras de levier formés entre les pivots et la rampe de la bascule de coopération avec la vis.

Dans la forme de réalisation effective de la cheville de l'invention, il est prévu des moyens de perçage, ou de forage, à l'extrémité de la bascule et s'étendant sensiblement dans un premier plan de symétrie du corps disposé entre les bras latéraux.

De préférence encore, l'orifice de la bascule possède des nervures intérieures sur lesquelles le filet de la vis de fixation est destiné à venir en prise et la rampe de coopération avec la vis est évidée pour éviter que la pointe de la vis ne s'y plante.

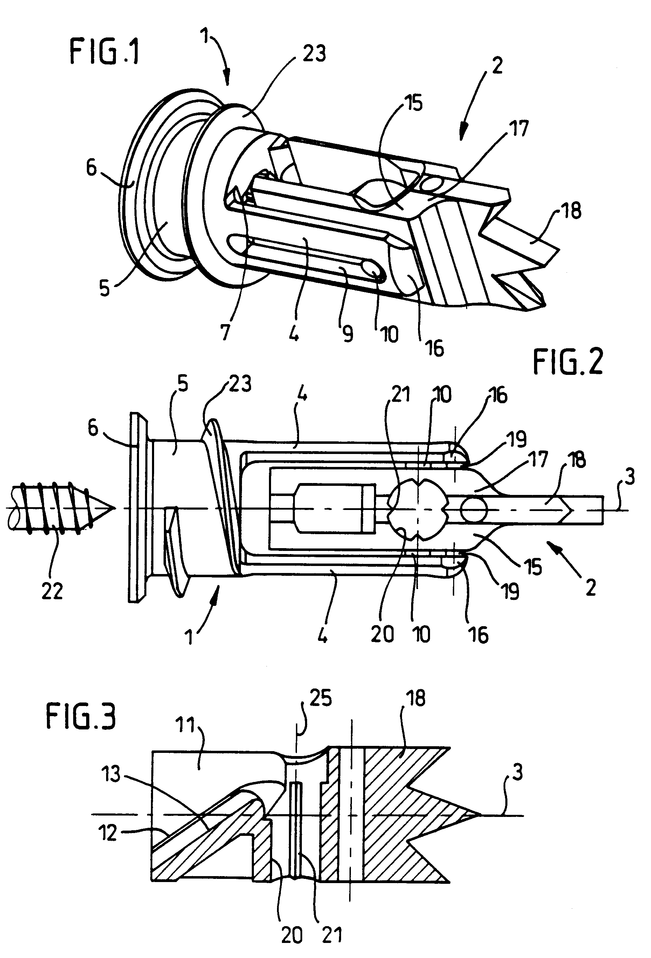

L'invention sera mieux comprise à l'aide de la description suivante de la cheville de l'invention et des porte-empreinte de moule, broche et tiroirs utilisés pour son moulage, en référence au dessin annexé sur lequel
- la figure 1 représente une vue en perspective avant de dessus de la cheville sortie de moule ;
- la figure 2 représente une vue de dessous de la cheville ;
- la figure 3 représente une vue en coupe, le long de son plan de symétrie, de la bascule de la cheville ;

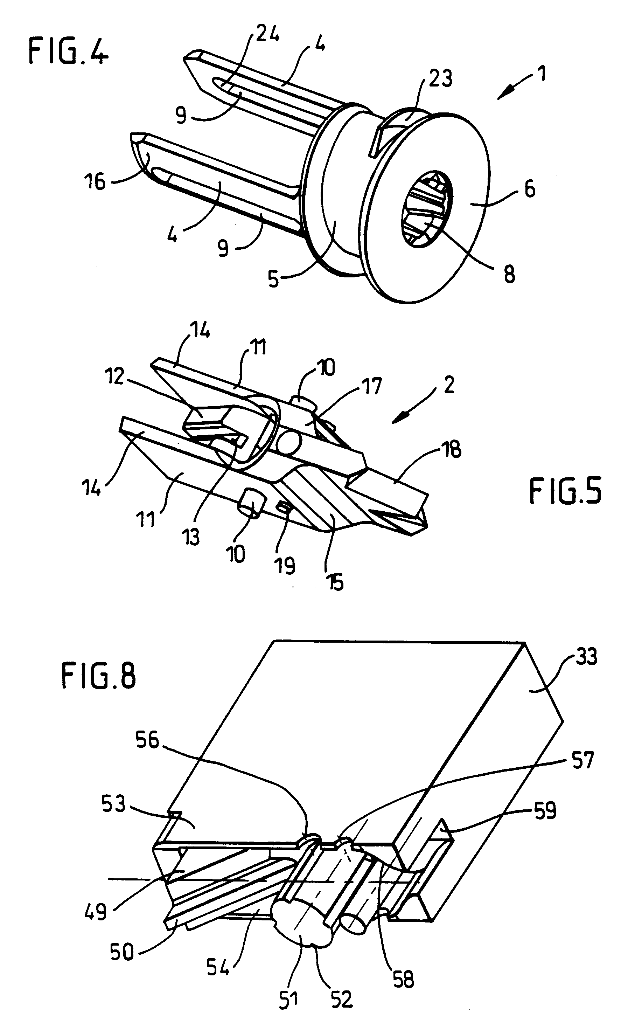

- la figure 4 représente une vue en perspective arrière de dessus du corps de cheville ;

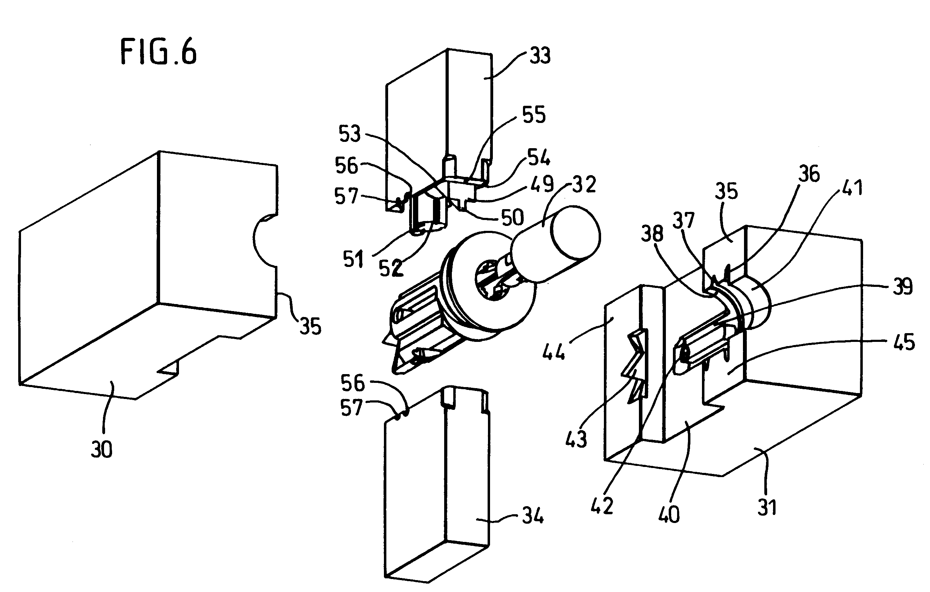

- la figure 5 représente une vue en perspective avant de dessus de la bascule de la cheville ;
- la figure 6 représente une vue en perspective arrière de dessous et éclatée des porte-empreinte de moule, broche et tiroirs de moulage et après moulage de la cheville ;

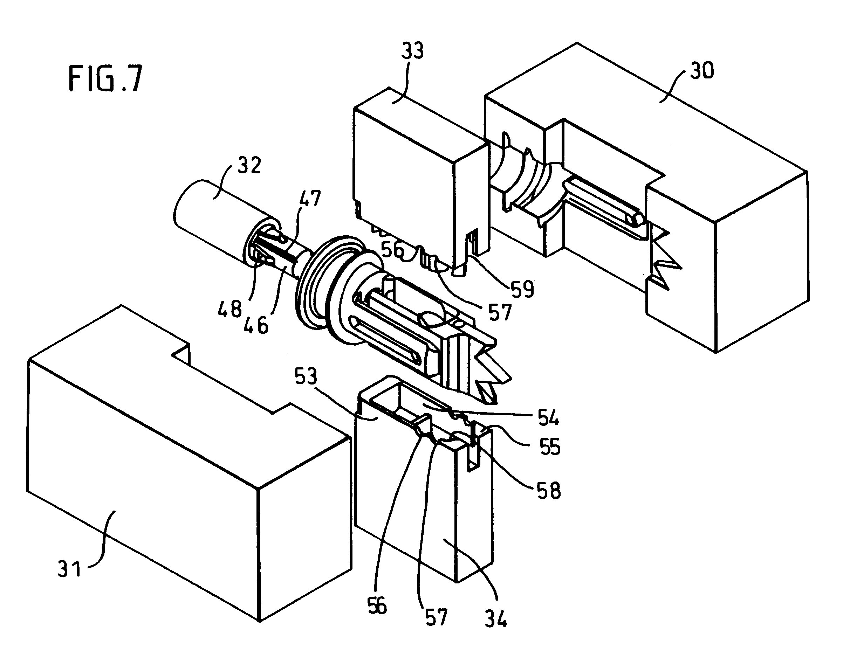

- la figure 7 représente une vue en perspective avant de dessus et éclatée des pièces de la figure 6 et
- la figure 8 représente une vue en perspective de dessous du tiroir latéral de moulage de la rampe et de l'orifice de coopération avec la vis de la bascule.

La cheville qui va maintenant être décrite a été réalisée d'une seule pièce en matière injectable, ici en alliage de zinc, par injection dans un moule constitué de porte-empreinte, d'une broche et de tiroirs qui seront décrits ultérieurement.

La cheville comporte un corps 1 et une bascule 2

Le corps 1 a une forme générale tubulaire, d'axe 3, avec deux plans de quasi-symétrie orthogonaux et sécants le long de l'axe 3, plans qui, par souci de simplification, seront qualifiés de symétrie dans la suite de la description. Symétriques par rapport à un premier de ces deux plans, deux bras latéraux allongés 4 prolongent la périphérie d'un tronc arrière 5 pourvu, à l'arrière, d'une collerette d'appui 6.

Un alésage 7, de passage d'une vis de fixation 22, traverse de part en part le tronc 5 pour déboucher entre les bras 4. La partie postérieure 8, adjacente à la collerette 6, de l'alésage 7 a une conformation de type Phillips, ou Posidrive, pour l'entraînement du corps en rotation par un outil approprié. La paroi extérieure du tronc 5 porte un filetage hélicoïdal 23 de préfixation de la cheville et destiné, après fixation, à en empêcher la rotation. Dans chacun des bras 4 est ménagée une rainure oblongue 9 s'étendant parallèlement à l'axe 3 et dans laquelle est engagé un pivot 10 de la bascule 2, pour son basculement et son coulissement.

La bascule 2 possède un plan de symétrie confondu avec le plan de symétrie du corps 1 de part et d'autre duquel s'étendent les bras 4.

La bascule 2 possède deux joues 11 de longueur sensiblement égale à celle des rainures 9 des bras 4, entre lesquelles est formée une rampe intérieure 12, inclinée sur l'axe 3 et traversant le deuxième plan de symétrie du corps 1, destinée à coopérer avec la vis 22 pour provoquer le pivotement de la bascule.

Pour éviter que la vis ne se "plante" dans la rampe 12, celle-ci est évidée pour présenter une rainure 13 de réception de la pointe de la vis 22.

A la sortie du moule, les joues 11 de la bascule s'étendent parallèlement aux bras 4 du corps, avec leurs extrémités postérieures libres 14 proches du tronc 5 du corps et leurs extrémités antérieures 15 sensiblement au niveau des extrémités antérieures libres 16 des bras 4, ces extrémités antérieures 15 de la bascule étant réunies en une zone transversale de raccordement 17, conférant à la bascule une forme d'étrier et servant de base à une saillie de perçage antérieure 18, ici à trois dents avant, s'étendant sensiblement dans le plan de symétrie de la bascule.

Les deux pivots 10 de la bascule font saillie latéralement hors des joues de la bascule, légérement en-deçà de la zone 17. A la sortie du moule, ces pivots 10 sont pratiquement contre les fonds antérieurs 24 des rainures 9.

Deux pions 19, en saillie latéralement hors de la zone de raccordement 17 des joues 11 de la bascule, au-delà des pivots 10, réunissent ici la bascule et les extrémités antérieures 16 des bras 4 du corps pour, à la sortie du moule et en position d'introduction de la cheville dans une paroi, empêcher le pivotement de la bascule.

La rampe 12 prolonge, vers l'arrière, la paroi d'un orifice transversal 20, d'axe 25, dans le plan de symétrie de la bascule, orthogonal à l'axe 3, destiné à coopérer, au-delà de la rampe 12, avec la vis de fixation 22. La paroi de cet orifice 20 est pourvue, à cet effet, de nervures intérieures 21 sur lesquelles la vis 22 est destinée à venir en prise.

Les pivots 10 ont ici une section plus grande que celle des pions 19. L'espacement entre le pivot 10 et le pion 19 de chaque joue 11 est sensiblement égal à la moitié de l'espacement axial entre les pivots 10 et l'arrière de la rampe 12.

Pour fixer une pièce à une paroi, on commence par y fixer la cheville. A l'aide d'un outil approprié qu'on introduit dans la partie 8 de l'alésage 7 du corps 1, on entraîne la cheville en rotation qui, par sa saillie 18, fore un trou dans la paroi. A cet égard, la cheville peut être qualifiée d'auto-foreuse. On poursuit l'entraînement de la cheville, le corps 1, et la bascule 2 avec, grâce notamment aux pions 19, se vissant dans la paroi, jusqu'à ce que la collerette 6 vienne en appui contre la paroi.

On pose ensuite la pièce à fixer sur la collerette 6 et on introduit la vis 22, d'abord à travers un alésage préalablement percé dans la pièce, puis à travers l'alésage 7 du tronc 5 du corps 1.

La vis 22 ayant atteint la rampe 12 de la bascule, alors dans une position dite d'insertion dans laquelle elle est alignée avec les bras 4 du corps, on continue de pousser la vis qui, en glissant le long de la rampe 12 après avoir cisaillé les pions 19, c'est-à-dire les avoir détachés de la bascule 2, grâce aux bras de levier entre les pivots 10 et l'arrière de la rampe 12, fait pivoter autour des pivots 10 la bascule 2 dans une position basculée dans laquelle elle est perpendiculaire aux bras 4 du corps 1. Au-delà de la rampe 12, la vis 22, qui continue d'être entraînée vers l'avant, pénètre dans l'orifice 20 et vient en prise avec ses nervures 21 dans lesquelles elle se visse pour faire coulisser les pivots 10 dans les rainures 9 et donc coulisser, ou remonter, la bascule 2 vers le tronc 5 du corps 1 perpendiculairement aux bras 4 du corps 1, de la position basculée à une position de fixation dans laquelle elle est en butée contre la paroi.

La cheville a donc été moulée par injection dans un moule ici constitué d'une paire de porte-empreinte identiques et complémentaires 30, 31 de moulage du corps 1, d'une broche axiale 32 de moulage de la partie 8 de l'alésage 7 du corps 1 et de deux tiroirs latéraux 33, 34 de moulage de la bascule 2.

Les deux porte-empreinte 30, 31 sont réunies le long d'un plan de joint 35 dans lequel s'étendra le premier plan de symétrie du corps 1. Chacun des porte-empreinte comporte l'empreinte d'une moitié de corps, avec un évidement cylindrique 41, pour une partie de la broche cylindrique axiale 32, un évidement circulaire 36, pour la collerette 6, un évidement hélicoïdal 37, pour le filetage 23, un évidement cylindrique 38, pour le tronc 5, un évidement 39 grossièrement annulaire, pour un bras 4, ménagé depuis une paroi intérieure plane 40 en retrait par rapport au plan de joint 35, un petit évidement cylindrique 42 pour le pivot 10, ménagé depuis la portion de paroi 40 à l'intérieur de l'évidement intérieur 39 et correspondant à la rainure 9, et un évidement 43, ménagé depuis la portion de paroi 44 du plan de joint 35, opposée à celle 45 des empreintes de la collerette, du filetage et du tronc, par rapport à la paroi 40 du bras, pour la saillie de perçage 18.

La broche axiale 32 porte un fût tronconique 46 pourvu de fines rainures axiales 47 et de grosses nervures axiales trapézoïdales 48, plus courtes que les rainures 47, pour le moulage de la partie 8 de l'alésage 7 du corps 1.

Le tiroir latéral supérieur 33 comporte l'empreinte de la rampe 12 et de l'orifice 20, avec une saillie à profil triangulaire 49, pour la rampe 12, portant, vers le bas, une nervure 50, pour la rainure 13, et un fût cylindrique 51 en saillie, avec des rainures 52, pour l'orifice 20 et ses nervures 21.

Les tiroirs 33, 34 sont parallélépipédiques, de largeur égale à la distance des deux parois 40 des deux porte-empreinte 30, 31 une fois joints et de longueur égale à la distance entre les deux portions de paroi 44, 45 des porte-empreinte 30, 31, pour être introduits latéralement et en sens opposés entre les deux porte-empreinte 30, 31.

Les tiroirs 33, 34 comportent, chacun, deux parois latérales longitudinales 53, 54, pour ménager les espaces entre les bras 4 du corps 1 et les joues 11 de la bascule 2.

Les deux tiroirs 33, 34 sont réunis le long d'un deuxième plan de joint 55 dans lequel s'étendra le second plan de symétrie du corps 1.

Les parois 53, 54 des deux tiroirs comportent des évidements circulaires 57, 56 pour le moulage des pions 19 et d'une partie des pivots 10, respectivement.

Les tiroirs 33, 34 sont intérieurement creusés selon un évidement conformé en 58 pour former la zone de raccordement 17 des joues 11 de la bascule.

Les tiroirs 33, 34 comportent une ouverture transversale 59 pour la saillie de perçage 18.

Pour mouler une cheville saine, l'injection de matière dans des parties du moule, qui doit être aussi rapide que possible, est réalisée à partir de plusieurs alimentations.

Mais on soulignera ici que les parties du moule correspondant à la bascule 2 sont alimentées au moins à travers les canaux formés par les évidements circulaires 57 de moulage des pions cisaillables 19 de maintien temporaire de la bascule.

Grâce à celà, c'est-à-dire grâce au fait que ces pions sont réalisés par un flux unidirectionnel de matière, et non par accumulation de matière, on assure, de façon reproductible, un calibrage parfait de ces pions et, par conséquent, leur cisaillement pour la force pour laquelle leur section a été déterminée. Il s'agit de bonnes conditions d'injection.

Des portions de filet hélicoïdal peuvent être prévues sur les bras 4 du corps 1.

## Revendications

1. Procédé de réalisation d'une cheville à bascule pour la fixation d'une pièce à une paroi support comprenant
- un corps (1) de forme générale tubulaire, avec deux bras latéraux allongés (4), comportant chacun, une rainure (9), et un alésage (7), débouchant entre les bras (4) pour le passage d'une vis (22) de fixation de la cheville et de la pièce,
- une bascule (2) montée coulissante et pivotante sur les bras (4) du corps (1), par deux pivots (10) s'étendant dans leurs rainures (9), avec une rampe (12) de coopération avec l'extrémité de la vis (22), pour faire pivoter la bascule (2) d'une position d'insertion de cheville dans la paroi, dans laquelle elle est alignée avec les bras (4), à une position basculée, dans laquelle elle est perpendiculaire aux bras (4), et un orifice (20), pour, en position basculée, coopérer avec la vis de fixation (22) et faire coulisser la bascule (2) perpendiculairement aux bras (4) du corps jusqu'à une position de fixation et
- des moyens (19) de maintien temporaire de la bascule (2) en position d'insertion entre les bras (4) du corps (1) et détachables sous l'action de la vis de fixation (22),
procédé caractérisé par le fait qu'on moule en matière injectable simultanément et en une seule pièce le corps (1) et la bascule (2), l'injection dans les parties de moule correspondant à la bascule (2) s'effectuant au moins par un pont d'alimentation comprenant les portions de moule (57) correspondant aux moyens (19) de maintien temporaire de la bascule (2) en position d'insertion.

2. Procédé selon la revendication 1, dans lequel on forme lesdits moyens de maintien (19) à l'extrémité libre (16) de l'un au moins des bras latéraux (4) du corps (1).

3. Procédé selon l'une des revendications 1 et 2, dans lequel on effectue le moulage du corps de cheville (1) à l'aide de deux porte-empreinte (30,31), joints le long d'un premier plan (35) de symétrie du corps s'étendant entre ses bras latéraux (4), de l'alésage (7) de passage de la vis de fixation (22) dans le corps, à l'aide d'une broche (32) qu'on introduit entre les deux porte-empreinte (30,31) le long de l'axe (3) du corps tubulaire (1) à former, et de la bascule (2), à l'aide de deux tiroirs (33,34) qu'on introduit latéralement entre les deux porte-empreinte (30,31) et en sens opposés le long dudit premier plan (35) de symétrie du corps et orthogonalement à la broche (32).

4. Cheville à bascule, pour la fixation d'une pièce à une paroi support, réalisée selon le procédé de l'une des revendications 1 à 3, caractérisée par le fait que lesdits moyens de maintien temporaire de la bascule en position d'insertion comprennent au moins un pion cisaillable (19) qui, lors de l'insertion de la cheville dans la paroi, entraîne la bascule (2) avec le corps (1).

5. Cheville selon la revendication 4, dans laquelle il est formé des pions de maintien cisaillables (19) aux extrémités libres (16) des bras (4) du corps (1).

6. Cheville selon l'une des revendications 4 et 5, dans laquelle des pivots de bascule (10) sont formés à proximité des extrémités libres (16) des bras (4) du corps.

7. Cheville selon la revendication 6, dans laquelle les pivots de bascule (10) sont formés en-deçà des pions de maintien (19).

8. Cheville selon la revendication 7, dans lequelle les pivots de bascule (10) ont une section plus grande que celle des pions de maintien (19).

9. Cheville selon la revendication 8, dans laquelle les pivots (10) sont formés quasiment aux fonds (24) des rainures (9) des bras (4) du corps (1).

10. Cheville selon l'une des revendications 6 à 9, dans laquelle les bras de levier formés entre les pivots (10) et les pions (19) sont sensiblement deux fois moins longs que les bras de levier formés entre les pivots (10) et la rampe (12) de la bascule (2) de coopération avec la vis (22).

11. Cheville selon l'une des revendications 4 à 10, dans laquelle il est prévu des moyens de perçage (18) à l'extrémité de la bascule (2) et s'étendant sensiblement dans un premier plan de symétrie du corps (1) disposé entre les bras latéraux (4).

12. Cheville selon l'une des revendications 4 à 11, dans laquelle l'orifice (20) de la bascule (2) possède des nervures intérieures (21) sur lesquelles le filet de la vis de fixation (22) est destiné à venir en prise.

13. Cheville selon l'une des revendications 4 à 12, dans laquelle la rampe (12) de coopération avec la vis (22) est évidée.

## Claims

1. Method of producing a rocker plug for fixing a piece to a supporting wall including
- a body (1 ) of basically tubular shape, with two elongate side arms (4) each comprising a groove (9), and a bore (7) opening out between the arms (4) for passage of a screw (22) for fixing the plug and the piece,
- a rocker (2) mounted slidably and pivotably on the arms (4) of the body (1) by two pivots (10) extending in their grooves (9), with a ramp (12) for cooperation with the end of the screw (22), for pivoting the rocker (2) from a position of insertion of the plug in the wall, in which it is aligned with the arms (4), to a tilted position in which it is perpendicular to the arms (4), and an orifice (20) for, in the tilted position, cooperating with the fixing screw (22) and sliding the rocker (2) perpendicularly to the arms (4) of the body as far as a fixing position, and
- means (19) for temporarily maintaining the rocker (2) in the insertion position between the arms (4) of the body (1) and detachable under the action of the fixing screw (22),
which method is characterised in that the body (1) and the rocker (2) are moulded of injectable material simultaneously and in one piece, injection in the mould portions corresponding to the rocker (2) being carried out at least by a supply bridge including the mould portions (57) corresponding to the means (19) for temporarily maintaining the rocker (2) in the insertion position.

2. Method according to claim 1, in which said maintaining means (19) are formed at the free end (16) of at least one of the side arms (4) of the body (1).

3. Method according to either of claims 1 and 2, in which moulding of the plug body (1) is carried out with the aid of two cavity holders (30, 31) joined along a first plane (35) of symmetry of the body extending between its side arms (4), of the bore (7) for passage of the fixing screw (22) in the body with the aid of a spindle (32) which is introduced between the two cavity holders (30, 31) along the axis (3) of the tubular body (1) to be formed, and of the rocker (2) with the aid of two slides (33, 34) which are introduced laterally between the two cavity holders (30, 31) and in opposite directions along said first plane (35) of symmetry of the body and orthogonally to the spindle (32).

4. Rocker plug for fixing a piece to a supporting wall, produced by the method of any of claims 1 to 3, characterised in that said means for temporarily maintaining the rocker in the insertion position include at least one shear pin (19) which, during insertion of the plug in the wall, entrains the rocker (2) with the body (1).

5. Plug according to claim 4, in which maintaining shear pins (19) are formed at the free ends (16) of the arms (4) of the body (1).

6. Plug according to either of claims 4 and 5, in which rocker pivots (10) are formed close to the free ends (16) of the arms (4) of the body.

7. Plug according to claim 6, in which the rocker pivots (10) are formed on this side of the maintaining pins (19).

8. Plug according to claim 7, in which the rocker pivots (10) have a larger section than that of the maintaining pins (19).

9. Plug according to claim 8, in which the pivots (10) are formed almost at the bottoms (24) of the grooves (9) of the arms (4) of the body (1).

10. Plug according to any of claims 6 to 9, in which the lever arms formed between the pivots (10) and the pins (19) are approximately twice as short as the lever arms formed between the pivots (10) and the ramp (12) of the rocker (2) for cooperation with the screw (22).

11. Plug according to any of claims 4 to 10, in which piercing means (18) are provided at the end of the rocker (2) and extending approximately in a first plane of symmetry of the body (1) arranged between the side arms (4).

12. Plug according to any of claims 4 to 11, in which the orifice (20) of the rocker (2) has internal ribs (21) on which the thread of the fixing screw (22) is designed to engage.

13. Plug according to any of claims 4 to 12, in which the ramp (12) for cooperation with the screw (22) in hollowed out.

## Patentansprüche

1. Verfahren zur Herstellung eines eine Wippe aufweisenden Dübels zur Befestigung eines Teils an einer tragenden Wand, umfassend
- einen allgemein rohrförmigen Mantel (1) mit zwei seitlichen, langgestreckten Armen, von denen jeder eine Nut (9) aufweist und eine Bohrung (7), die zwischen den Armen (4) endet für die Durchführung einer Schraube (22) zur Befestigung des Dübels und des Teils,
- eine Wippe (2), die verschiebbar und verschwenkbar zwischen den Armen (4) des Mantels (1) über zwei in die Nuten (9) eingreifende Zapfen (10) gelagert ist und die eine Rampe (12) aufweist, die mit dem Ende der Schraube so zusammenwirkt, daß die Wippe (2) von einer Einsatzposition des Dübels in der Wand, in der sie mit den Armen (4) ausgerichtet ist, in eine gekippte Position, in der sie sich senkrecht zu den Armen (4) erstreckt, verschwenkt wird sowie eine Öffnung (20), die in der gekippten Position mit der Befestigungsschraube (22) zusammenwirkt und die Verschiebung der Wippe (2) senkrecht auf den Armen (4) bis in eine Befestigungsposition ermöglicht und
- Mittel (19) für die zeitweilige Aufrechterhaltung der Wippe in der Einsetzposition zwischen den Armen (4) des Mantels (1), welche durch die Wirkung der Befestigungsschraube (22) lösbar sind,
gekennzeichnet durch die Tatsache, daß man aus einem spritzbaren Material gleichzeitig und einteilig den Mantel (1) und die Wippe (2) formt und in die Partien der Form, die der Wippe (2) entsprechen, über eine Einspeisbrücke einspritzt, die die Abschnitte der Form (57) enthält, die den Mitteln (19) zur zeitweiligen Halterung der Wippe (2) in der Einsetzposition entsprechen.

2. Verfahren nach Anspruch 1, dadurch gekennzeichnet, daß die Aufrechterhaltungsmittel (19) an dem freien Ende (16) mindestens eines der seitlichen Arme (4) des Mantels (1) vorgesehen sind.

3. Verfahren nach Anspruch 1 oder 2, dadurch gekennzeichnet, daß die Formung des Dübelmantels (1) mit Hilfe zweier Formhälften (30, 31) erfolgt, die entlang einer ersten Symmetrieebene (35) des Mantels gegeneinander anliegen, die sich zwischen den seitlichen Armen (4) und der Bohrung (7) für die Durchführung der Befestigungsschraube (22) durch den Mantel erstreckt, ferner mit Hilfe eines Kerns (32), der zwischen die Formhälften (30, 31) entlang der Achse (3) des zu formenden rohrförmigen Mantels (1) eingeführt wird, und der Wippe (2) mit Hilfe von zwei Schiebern (33, 34), die seitlich zwischen den beiden Formhälften (30, 31) eingeführt werden, einander gegenüberliegend entlang der ersten Symmetrieebene (35) des Mantels und orthogonal zum Kern (32).

4. Kippdübel zur Befestigung eines Teils an einer tragenden Wand, hergestellt nach dem Verfahren eines der Ansprüche 1 bis 3, dadurch gekennzeichnet, daß die Mittel zur zeitweiligen Aufrechterhaltung der Wippe in der Einsetzposition mindestens ein abscherbares Pion (19) aufweist, welches beim Einsetzen des Dübels in die Wand die Wippe (2) mit dem Mantel (1) verbindet.

5. Dübel nach Anspruch 4, dadurch gekennzeichnet, daß die abscherbaren Pions (19) an den freien Enden (16) der Arme (4) des Mantels (1) geformt sind.

6. Dübel nach Anspruch 4 und 5, dadurch gekennzeichnet, daß die Schwenkzapfen der Wippe (10) nahe den freien Enden (16) der Arme (4) des Mantels geformt sind.

7. Dübel nach Anspruch 6, dadurch gekennzeichnet, daß die Schwenkzapfen der Wippe (10) diesseits der Haltepions (19) geformt sind.

8. Dübel nach Anspruch 7, dadurch gekennzeichnet, daß die Schwenkzapfen (10) einen viel größeren Querschnitt haben als die Haltepions (19).

9. Dübel nach Anspruch 8, dadurch gekennzeichnet, daß die Schwenkzapfen (10) am Grund (24) der Nuten (9) der Arme (4) des Mantels (1) geformt sind.

10. Dübel nach einem der Ansprüche 6 bis 9, dadurch gekennzeichnet, daß der Hebelarm zwischen den Schwenkzapfen (10) und den Pions (19) zweimal weniger lang ist als der Hebelarm zwischen den Schwenkzapfen (20) und der Rampe (12) der Wippe (2), die mit der Schraube (22) zusammenwirkt.

11. Dübel nach einem der Ansprüche 4 bis 10, dadurch gekennzeichnet, daß am Ende der Wippe (2) Eindringmittel (18) vorgesehen sind, die sich merklich in der ersten Symmetrieebene des Mantels (1) zwischen den seitlichen Armen (4) erstrecken.

12. Dübel nach einem der Ansprüche 4 bis 11, dadurch gekennzeichnet, daß die Öffnung (20) der Wippe (2) innere Rippen (21) aufweist, mit denen das Gewinde der Befestigungsschraube (22) in Eingriff gelangt.

13. Dübel nach einem der Ansprüche 4 bis 12, dadurch gekennzeichnet, daß die Rampe (12), die mit der Schraube (22) zusammenwirkt, durchbrochen ist.
